## Europäisches Patentamt

## European Patent Office

## Office européen des brevets

(11) Publication number: **0 215 446**
A2

(12)

# EUROPEAN PATENT APPLICATION

(21) Application number: 86112567.2

(22) Date of filing: 11.09.86

(51) Int. Cl.⁴: **G 01 N 27/28**

(30) Priority: 11.09.85 JP 201278/85

(43) Date of publication of application: 25.03.87 **Bulletin 87/13**

(84) Designated Contracting States: **DE FR GB**

(71) Applicant: **FUJI PHOTO FILM CO., LTD., 210 Nakanuma Minami Ashigara-shi, Kanagawa 250-01 (JP)**

(72) Inventor: **Kondo, Asaji, c/o Fuji Photo Film Co., Ltd. 3-11-46, Senzui, Asaka-shi Saitama (JP)**

(74) Representative: **Kraus, Walter, Dr. et al, Patentanwälte Kraus, Weisert & Partner Thomas-Wimmer-Ring 15, D-8000 München 22 (DE)**

(54) Device and method for measuring ion activity.

(57) A device for measuring ion activity comprising two multilayer ion-selective half cells in flat form which are arranged on a supporting frame and electrically insulated from each other and which are provided with ion-selective membrane as the outermost layer; a porous bridge capable of absorbing and retaining an aqueous liquid which is arranged in such a manner that said porous bridge covers at least a portion of said both outermost layers of the half cells, and a dry and water-soluble salt provided in the region from the surface of a outermost layer on one of the half cells to the porous bridge on said half cell. A method for measuring ion activity using the device is also disclosed.

EP 0 215 446 A2

# DEVICE AND METHOD FOR MEASURING ION ACTIVITY

## BACKGROUND OF THE INVENTION

### Field of the invention

The present invention relates to a device for measuring ion activity in flat form and a method for measuring ion activity employing the same. More particularly, the invention relates to a disposable measuring device employable for selective determination of ion activity of the specific ion in a liquid sample and capable of measuring ion activity by supplying only a liquid sample, namely, without supplying any reference liquid, and a method for measuring ion activity employing the same.

### Description of prior arts

An ion activity measuring device in flat form based on measurment of potential difference is employed for determinating ion activity or ion concentration corresponding to the ion activity of the previously specified ion in a liquid sample. Examples of the measuring device are described, for instance, in Japanese Patent Provisional Publications No. 52(1977)-142584, No. 55(1980)-20499, No. 57(1982)-172241, No. 57(1982)-17851, No. 57(1982)-17852 and No. 58(1983)-211648, United States Patents No. 4,053,381 and No. 4,454,007, and "Kagaku No Ryoiki (Field of Chemistry)" Vol. 35, Section 4, pages 278-279 (by Asaji Kondo, in Japanese). As one example of the measuring devices, a measuring device under the trade name of "Kodak Ektachem: Clinical Chemistry Slide for Sodium, Potassium and Chloride" is supplied by Eastman Kodak.

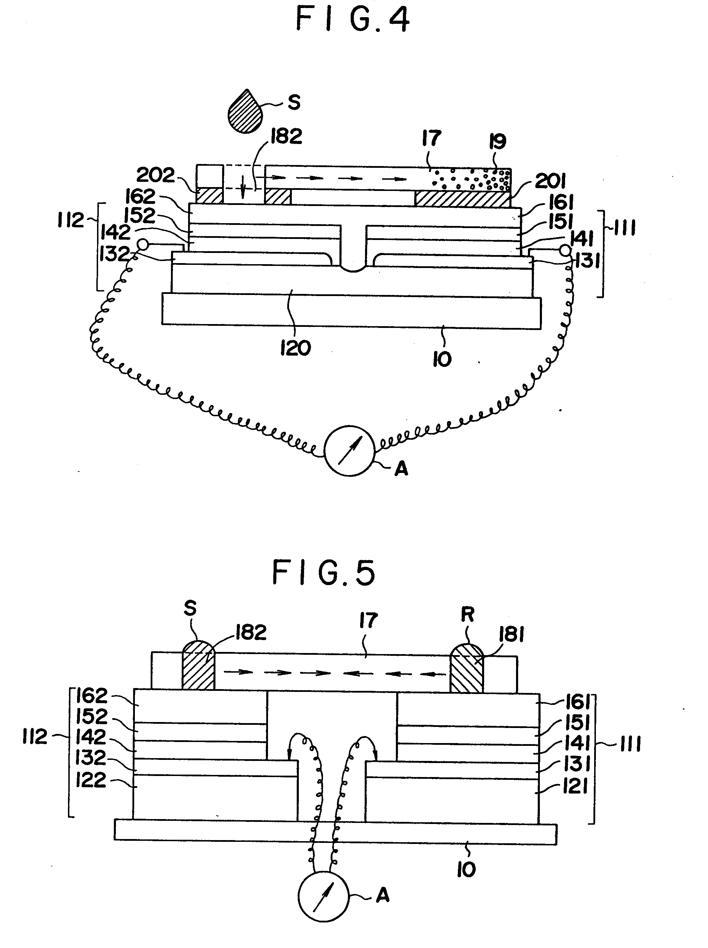

The ion activity measuring device in flat form (namely, an ion activity-measuring slide) is an epoch-making device having excellent characteristics. For instance, the device is small-sized and disposable dry device for which a liquid for immersing the device therein is unnecessary. In addition, the ion activity measuring device is free from pre-conditioning and carry-over, and is readily stored. Further, an accurate determination of ion activity can be stably made using the dry device. The basic structure of the device is schematically shown in Fig. 5. In Fig. 5, the ion activity measuring device comprises a frame (i.e., supporting frame) 10 and a reference electrode 111 of a multilayer ion-selective half cell in a flat or film form. A measuring electrode 112 has the same structure as that of the reference electrode 111. The reference electrode 111 comprises a support 121 and an ion-selective membrane 161 provided on the outermost side. Likewise, the measuring electrode 112 comprises a support 122 and an ion-selective membrane 162 provided on the outermost side. A porous bridge 17 is arranged on the electrodes 111 and 112 to bridge both electrodes. The device is provided with two openings for a reference liquid-receiving opening 181 to receive spotting of a reference liquid and a liquid sample-receiving opening 182 to receive spotting of a liquid sample. Each of metal layers 131 and 132 independently has a metallic surface exposed outside of each electrode, and serve as a terminal for connection to potential difference-measuring device A (i.e., electrometer or potentiometer).

The measurement of ion activity of the specific ion in a liquid sample is practically carried out in the following manner using the above-mentioned ion activity-measuring device. An aqueous liquid sample and a reference liquid (aqueous salt solution) having a known concentration are simultaneously introduced into the device shown in Fig. 5 through the liquid sample-receiving opening 182 of the measuring electrode 112 and the reference liquid-receiving opening 181 of the reference electrode 111, respectively. After lapse of a few minutes, potential difference is measured by the use of the electrometer A, and the measured potential difference is compared against the calibration curve according to Nernst's formula to determine ion activity of the specified ion in the aqueous liquid sample.

In the measurement of ion activity using the above-mentioned ion activity measuring device, it is necessary that an aqueous salt solution having a known concentration is beforehand prepared as a reference liquid, that the solution is severely stored so as not to produce composition variation, and that both of the aqueous salt solution and liquid sample are employed simultaneously. However, it has been confirmed that the reference liquid causes various troubles in the analyzing process using the ion activity measuring device. For instance, a tip of pipet is choked up with the reference liquid, variation of salt concentration of the liquid is observed in the pipet, and the analyzing device is stained around the position of the pipet with the applied liquid. The reason is that the aqueous salt solution is readily varied in its composition or easily deposited fo form crystals owing to evaporation of water under atmospheric conditions. Further, a skilled technique is required for simultaneously spotting both of the reference liquid and the liquid sample in the specific amount on the fixed place, and the system is complicated in the case that the process is automated. For these reasons, the use of the reference liquid is preferably omitted if possible.

## SUMMARY OF THE INVENTION

It is an object of the present invention to provide an ion activity measuring device in flat form utilizing determination of potential difference which can determine ion activity or ion concentration of a specific ion in a liquid sample by supplying only the sample liquid, namely without supplying any reference aqueous salt solution, and a method for measuring ion activity employing the device.

As a result of study, the present inventors have found that an aqueous salt solution serving as a reference liquid is _in situ_ produced on a reference electrode of an ion activity-measuring device by introducing only a liquid sample into the device. The present invention is based on a system for introducing a previously dried salt into a conventional ion activity-measuring device in flat form utilizing determination of potential difference, that is, a system involving provision of a dry, water-soluble salt in a region such as in a portion of the bridge in such a manner that the provided salt is in contact with the surface of the outermost layer of the reference electrode which is to be connected to the bridge directly or indirectly through a spacer.

There is provided by the present invention an ion activity-measuring device comprising:

two multilayer ion-selective half cells of the same nature in flat form which are arranged on a supporting frame and electrically insulated from each other and which are provided with ion-selective membrane as the outermost layer;

a porous bridge capable of absorbing and retaining an aqueous liquid which is arranged in such a manner that said porous bridge covers at least a portion of said both outermost layers of the half cells; and

a dry, water-soluble salt provided in the region from the surface of a outermost layer on one of the half cells to the porous bridge on said half cell,

In the ion activity-measuring device of the invention, the dry, water-soluble salt can be incorporated in a portion of the porous bridge on the side of the reference electrode, can be provided outside of and in contact with the porous bridge on the side of the reference electrode, or can be provided in the region between the porous bridge and the surface of the ion-selective membrane on the side of the reference electrode.

The ion activity-measuring device of the invention can be employed in a method comprising the steps of:

spotting an aqueous liquid sample in the region on the side where where the salt is not provided so that the porous bridge absorbs and retains water of the liquid sample, and at least a portion of the salt is dissolved in the water so as to electrically connecting both half cells to each other;

simultaneously or thereafter measuring the potential difference between both half cells; and

determining the ion activity of the previously specified ion in the aqueous liquid sample.

### BRIEF DESCRIPTION OF THE DRAWINGS

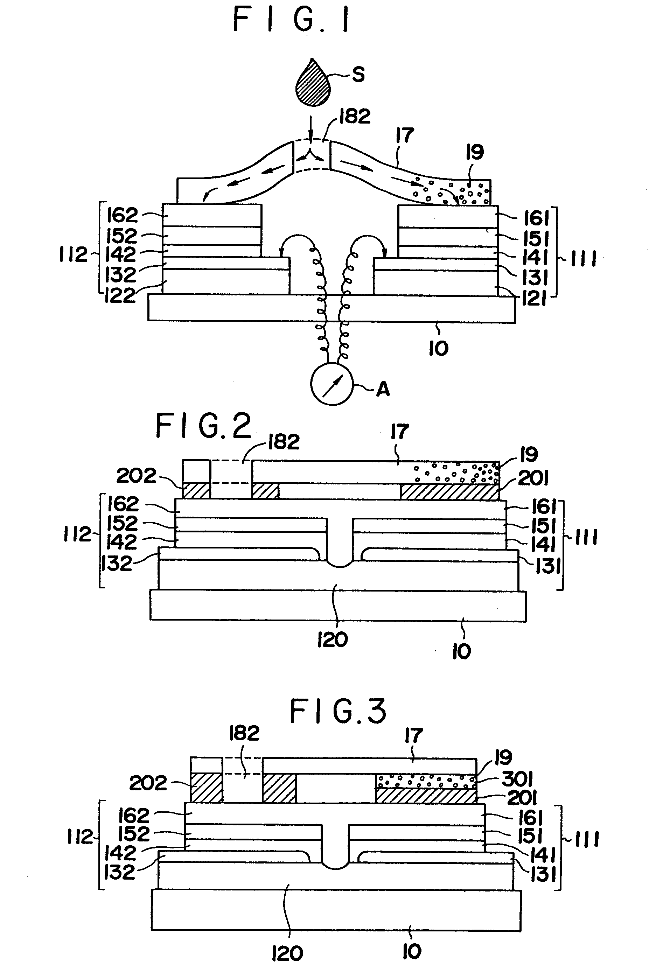

Fig. 1 is a sectional schematic view taken along a porous bridge, which illustrates one embodiment of the ion activity-measuring device in flat form (in the form having a flat surface) utilizing determination of potential difference according to the present invention.

Each of Figs. 2 and 3 is a sectional schematic view taken along a porous bridge, which illustrates a modified embodiment of the ion activity measuring device according to the invention.

Fig. 4 is a schematic view illustrating a process of measuring ion activity of the previously specified ion which employs the ion activity-measuring device of the present invention shown in the sectional schematic view of Fig. 2.

Fig. 5 is a sectional schematic view taken along a porous bridge, which illustrates a representative embodiment of the conventional ion activity measuring device.

DETAILED DESCRIPTION OF THE INVENTION

The present invention will be described in more detail hereinafter by referring to the embodiments shown in the accompanying drawings.

Fig. 1 is a sectional schematic view taken along a porous bridge, which illustrates one embodiment of the ion activity measuring device in the flat form (in the form having a flat surface) based on determination of potential difference according to the invention.

In Fig. 1, on a supporting frame 10 are provided a reference electrode 111 and a measuring electrode 112. Each of the electrodes is an ion-selective half cell, respectively, and both are substantially the same as each other. A porous bridge 17 is provided to connect both electrodes. The reference electrode comprises an electrically insulating support 121, a metal layer 131 and an ion-selective membrane 161 (the outermost layer). Likewise, the measuring electrode comprises an electrically insulating support 122, a metal layer 132 and an ion-selective membrane 162 (the outermost layer). A previously dried salt 19 (also referred to hereinafter as dry salt) is provided in a certain portion of the porous bridge in the vicinity of the outermost layer of the reference electrode in such a manner that the salt is brought into direct contact with the surface of the outermost layer 161.

Each of Figs. 2 and 3 is a sectional schematic view taken along a porous bridge, which illustrates an modified embodiment of the ion activity measuring device shown in Fig. 1.

In Fig. 2, a spacer 201 is provided on the outermost

layer 161 of the reference electrode so that the dry salt 19 provided within the porous bridge 17 is not in direct contact with the outermost layer 161.

Fig. 3 illustrates a manner of providing a dry salt, in which a porous sheet 201 containing and retaining the powdery dry salt is provided between a spacer 201 and a porous bridge 17.

Both of the spacer 201 and the porous sheet 301 of the ion activity measuring devices shown in Figs. 2 and 3 are prepared from porous or water-absorbing materials, and accordingly the flow of the supplied liquid sample can be readily produced between the reference and measuring electrodes in the process of measurement of ion activity.

A method for measuring ion activity or ion concentration of the previously specified ion in a liquid sample using the ion activity measuring device of the present invention will be described in detail hereinafter.

Fig. 4 is a schematic view illustrating a process of measuring ion activity which employs the measuring device shown in the sectional schematic view of Fig. 2.

The process is as follows.

i) A liquid sample S is spotted on a liquid sample-receiving opening 182 of a porous bridge 17 by means of a liquid sample-spotting instrument such as a micro pipet.

ii) A portion of the liquid sample is absorbed and retained in the porous bridge, and further moves and spreads on the surface of or inside the bridge to reach the region of the bridge containing a dry salt. A portion of the dry salt is dissolved in water of the liquid sample to produce an aqueous salt solution. The produced aqueous salt solution permeates a spacer 201 and passes through the spacer to reach the surface of ion-selective membrane (outermost layer) of a reference electrode 111, whereby both of the reference and measuring electrodes are electrically connected to each other via the bridge.

iii) Potential difference between both electrodes is measured when the potential difference is in stable condition after the aqueous salt solution reaches the ion-selective membrane of the reference electrode. The measured potential difference is compared against the calibration curve to determine ion activity or ion concentration of the specific ion in the liquid sample.

Liquid sample S is generally spotted in an appropriate amount on the liquid sample-receiving opening 182 provided on the region of the porous bridge where the dry salt is not distributed.

The dry salt is provided in the porous bridge on the side of reference electrode in such a manner that a portion of the dry salt is dissolved in water of the supplied liquid sample which has reached the salt by moving and spreading inside the porous bridge so as to produce a concentrate aqueous salt solution, preferably a substantially saturated aqueous solution of salt. In the ion activity measuring device of the present invention, it is unnecessary to supply a reference liquid, because a concentrate aqueous salt solution or a saturated aqueous solution of salt which is produced in the vicinity of the ion-selective membrane of the reference electrode by supplying the sample liquid serves as the reference liquid.

Materials of each member employable for the device of the present invention will be described hereinafter.

(1) Multilayer ion-selective half cell in a flat form (or film form)

Examples are as follows:

a multilayer type comprising a support and four functional layers provided thereon comprising a metal layer, a metal layer of a water-insoluble salt, an electrolyte layer, and an ion-selective membrane, as disclosed in Japanese Patent Provisional Publication No. 52(1977)-142580, and Japanese Patent Applications No. 59(1984)-93775, No. 59(1984)-128239 and No. 59(1984)-128240;

a multilayer type comprising a support and three functional layers prepared by eliminating the electrolyte layer from the above-mentioned four functional layers, as described in Japanese Patent Provisional Publication No. 57(1982)-17851; and

a multilayer type comprising a support and two functional layers prepared by eliminating the electrolyte layer and the metal layer of a water-insoluble salt from the above-mentioned four functional layers, as described in Japanese Patent Provisional Publication No. 48(1973)-82897.

Preferred is a pair of ion selective electrodes comprising the same nature of two ion-selective half cells of flat type provided on one support which are electrically insulated from each other, as described in Japanese Patent Provisional Publication No. 58(1983)-167963 and Japanese Patent Application No. 59(1984)-100317. A silver layer and a silver chloride layer are preferably employed as the metal layer and the metal layer of a water-insoluble salt, respectively.

(2) Porous bridge

Examples of material of the porous bridge include woven fabrics, knit fabrics, nonwoven fabrics, threads, strings, sheets prepared from powders or particles, water-absorbing papers, glass fiber papers, and porous plastic sheets such as a membrane filter and a foam paper.

(3) Spacer

The spacer serves as an insulator for keeping the dry salt from direct contact with the outermost layer of the reference electrode. However, the material of the spacer should be a porous or water-permeable material capable of making a liquid sample pass therethrough upon receiving the liquid sample. Examples of the material of the spacer include the same porous material as that of the porous bridge, and a water-permeable or water-soluble film such as gelatin, agar-agar, starch, wafer, polyvinyl alcohol, polyacrylamide, and polyvinyl pyrrolidone, vinyl monomer-maleic anhydride copolymer.

(4) Porous sheet for retaining dry salt

The material employable for the porous sheet can be the same material as that of the porous bridge or spacer, and the material can retain the salt in the form of fine particle or film which is readily soluble.

(5) Dry salt

The dry salt is dissolved in water of the liquid sample supplied into the present device in the measuring process to produce a concentrate or saturated aqueous solution of salt. As a result, the outermost layer of the reference electrode is brought into contact with the aqueous salt solution having the specific concentration. The dry salt is prepared by combining a cation such as $K^+$, $Na^+$, $Li^+$ or $NH_4^+$ and an anion such as halogen (e.g., $Cl^-$ orBr$^-$), $NO_3^-$, $SO_4^{2-}$ or carboxylic anion. Examples of the salt include inorganic salts or organic salts which are conventionally employed in the electrochemistry technology. Those inorganic or organic salts can be employed singly or in combination.

In the ion activity measuring device of the present invention, the amount of inorganic salt can be appropriately varied to produce an aqueous salt solution having an electrochemically constant concentrattion with the specific amount of the liquid sample. Preferably, the dry salt is employed in such an amount that a portion of the dry salt is dissolved in water of the liquid sample to produce a saturated aqueous solution of salt. For introducing the salt into the porous bridge, there can be used a conventional method such as a method for immersing a portion of the porous bridge in an aqueous salt solution or a solution containing salt in a aqueous organic solvent (e.g., methanol and ethanol), and drying the immersed porous bridge; or a method for coating an aqueous salt solution onto a portion of the porous bridge, and drying the coated porous bridge.

In the conventional method using an ion activity measuring device according to the differential determination, a reference liquid is necessarily supplied in the device. In contrast, according to the present invention, ion activity or ion concentration of the specific ion in the liquid sample can be accurately determined by supplying only the liquid sample without supplying a reference liquid, because in the present device the dry salt is provided inside the porous bridge or the region in contact with the porous bridge in the vicinity of the outermost layer (i.e., ion-selective membrane) of the reference electrode. Therefore, the method and device of measuring ion activity according to the present invention have prominent advantages such that the measuring operation can be simply and easily performed. Further, as the secondary advantages, a system for performing the present method can be readily combined with an automated analyzer because of the simple and easy operation system. In addition to the above-mentioned advantages, the present method or device are free from the aforementioned various troubles accompanied by the employment of the reference liquid, because the reference liquid is not necessarily employed in the present invention.

CLAIMS:

1. A device for measuring ion activity comprising:
two multilayer ion-selective half cells of the same nature in flat form which are arranged on a supporting frame and electrically insulated from each other and which are provided with ion-selective membrane as the outermost layer;
a porous bridge capable of absorbing and retaining an aqueous liquid which is arranged in such a manner that said porous bridge covers at least a portion of said both outermost layers of the half cells; and
a dry, water-soluble salt provided in the region from the surface of a outermost layer on one of the half cells to the porous bridge on said half cell.

2. The device as claimed in claim 1, wherein the dry, water-soluble salt is incorporated in a portion of the porous bridge on the side of the reference electrode.

3. The device as claimed in claim 1, wherein the dry, water-soluble salt is provided outside of and in contact with the porous bridge on the side of the reference electrode.

4. The device as claimed in claim 1, wherein the dry, water-soluble salt is provided in the region between the porous bridge and the surface of the ion-selective membrane on the side of the reference electrode.

5. A method for measuring ion activity using an ion activity measuring device comprising two multilayer ion-selective half cells of the same nature in flat form which are arranged on a supporting frame and electrically insulated from each other and which are provided with ion-selective membrane as the outermost layer, a porous bridge capable of absorbing and retaining an aqueous liquid which is arragned in such a manner that said porous bridge covers at least a portion of said both outermost layers of the half cells, and a dry and water-soluble salt provided in the region from the surface of a outermost layer on one of the half cells to the porous bridge on said half cell which comprises the steps of:

spotting an aqueous liquid sample in the region on the side where where the salt is not provided so that the porous bridge absorbs and retains water of the liquid sample, and at least a portion of the salt is dissolved in the water so as to electrically connecting both half cells to each other;

simultaneously or thereafter measuring the potential difference between both half cells; and

determining the ion activity of the previously specified ion in the aqueous liquid sample.

6. The method for measuring ion activity as claimed in claim 5, wherein the aqueous liquid sample is supplied in such an amount that the water of the aqueous liquid sample dissolves the salt to produce a substantially saturated aqueous solution of the salt.

7. The method for measuring ion activity as claimed in claim 5, using the ion activity-measuring device wherein the dry, water-soluble salt is incorporated in a portion of the porous bridge on the side of the reference electrode.

FIG. 1

FIG.2

FIG.3

F I G. 4

F I G. 5